(19) Europäisches Patentamt
European Patent Office
Office européen des brevets

(11) **EP 4 321 575 A1**

(12) **EUROPEAN PATENT APPLICATION**
published in accordance with Art. 153(4) EPC

(43) Date of publication:
**14.02.2024 Bulletin 2024/07**

(21) Application number: **22784393.5**

(22) Date of filing: **07.03.2022**

(51) International Patent Classification (IPC):
*C08K 5/5313* (2006.01)     *C08L 25/18* (2006.01)
*C08L 67/00* (2006.01)     *C08K 3/22* (2006.01)
*C08G 63/16* (2006.01)

(52) Cooperative Patent Classification (CPC):
C08G 63/16; C08K 3/22; C08K 5/5313;
C08L 25/18; C08L 67/00

(86) International application number:
**PCT/JP2022/009705**

(87) International publication number:
**WO 2022/215408 (13.10.2022 Gazette 2022/41)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **05.04.2021 JP 2021064150**

(71) Applicant: **TOYOBO MC Corporation**
**Osaka 530-0001 (JP)**

(72) Inventors:
• **TAMASHIRO, Yuki**
**Otsu-shi, Shiga 520-0292 (JP)**
• **AKAISHI, Takuya**
**Otsu-shi, Shiga 520-0292 (JP)**
• **AYUZAWA, Yoshitaka**
**Otsu-shi, Shiga 520-0292 (JP)**

(74) Representative: **Vossius & Partner**
**Patentanwälte Rechtsanwälte mbB**
**Siebertstrasse 3**
**81675 München (DE)**

(54) **FLAME-RETARDANT THERMOPLASTIC POLYESTER ELASTOMER RESIN COMPOSITION AND MOLDED ARTICLE OBTAINED THEREFROM**

(57)     The present invention aims to provide a flame-retardant thermoplastic polyester elastomer resin composition which has particularly excellent extrusion moldability, and from which a hollow and long molded article can be produced with a uniform thickness and with high accuracy. A flame-retardant thermoplastic polyester elastomer resin composition comprising 50 to 94 mass% of a thermoplastic polyester elastomer and 1 to 45 mass% of a flame retardant, wherein the thermoplastic polyester elastomer comprises a hard segment made of a polyester constituted of an aromatic dicarboxylic acid and an aliphatic or alicyclic diol and a soft segment mainly made of an aliphatic polycarbonate, wherein the hard segment and the soft segment are bonded to each other, and wherein the thermoplastic polyester elastomer is at least partially end-capped with a polycarbodiimide, characterized in that an MFR value of the resin composition is 2 to 15 g/10 min, and a difference between an MFR value at 35 minutes and an MFR value at 5 minutes after the resin composition is added is 0 to 20 g/10 min.

EP 4 321 575 A1

**Description**

Technical Field of the Invention

The present invention relates to a flame-retardant thermoplastic polyester elastomer resin composition having excellent formability, particularly extrusion moldability, as well as heat resistance, weather resistance, heat aging resistance, water resistance, low-temperature characteristics, and the like, and a molded article obtained therefrom.

Background Art

In recent years, materials of parts of automobiles and home electric appliances such as cables and hoses have been replaced by thermoplastic resins from conventional materials such as metals and rubbers. In addition, with the advancement of the performance of automobiles and home electric appliances, the number of cases where a plurality of components are arranged close to each other is increasing, and there is an increasing chance that resin components are exposed to ultra-high temperatures higher than in conventional cases. Therefore, development of a resin having all of heat aging resistance, flame retardancy, and hydrolysis resistance is strongly desired.

A vinyl chloride-based resin, an olefinic resin, a polyester-based resin, or the like has been used as a constituent resin of a cable. However, vinyl chloride-based resins and olefinic resins have low melting points and poor heat resistance. In addition, a polyester-based resin has a relatively high melting point but poor hydrolysis resistance and has a problem when used outdoors or in vehicles. In order to solve these problems, it has been proposed to use a thermoplastic polyester elastomer as a constituent resin of a cable.

Regarding such thermoplastic polyester elastomer, a thermoplastic polyester elastomer prepared from a crystalline polyester such as polybutylene terephthalate (PBT) and polybutylene naphthalate (PBN) as a hard segment and a polyoxyalkylene glycol such as polyoxytetramethylene glycol (PTMG) and/or a polyester such as polycaprolactone (PCL) and polybutylene adipate (PBA) as a soft segment has been known and put into practical use (for example, see Patent Documents 1 and 2).

A polyester polyether type elastomer using a polyoxyalkylene glycol as a soft segment as disclosed in Patent Document 1 is excellent in water resistance and low-temperature characteristics but is poor in heat aging resistance. A polyester polyester type elastomer using a polyester as a soft segment as disclosed in Patent Document 2 is excellent in heat aging resistance but is poor in water resistance and low-temperature characteristics. Therefore, neither of them has been able to satisfy the recent market demands.

To solve these problems, a thermoplastic polyester elastomer in which heat resistance and water resistance are improved by using an aliphatic carbonate as a soft segment has been proposed (see Patent Document 3). In addition, a flame-retardant elastomer resin composition obtained by blending various flame retardants into such a thermoplastic polyester elastomer has been proposed (see Patent Document 4). In addition, a flame-retardant elastomer resin composition in which a carbodiimide is blended in addition to a flame retardant so as to improve water resistance has been proposed (see Patent Document 5).

However, in the resin composition of Patent Document 4, there has been a problem that the melt viscosity decreases due to the blending of the flame retardant. In the resin composition of Patent Document 5, increase in the viscosity is likely to occur due to the carbodiimide residue. In addition, since the flame retardant and the carbodiimide are blended in the Patent Document 5, the decrease in the melt viscosity caused by the flame retardant and the viscosity increasing effect caused by the carbodiimide are not offset, but rather the increase in the viscosity is remarkable. Therefore, it is extremely difficult to control the melt viscosity. As a result, it has been difficult to produce a hollow and long molded article such as a cable and a hose with a uniform thickness.

Prior Art Documents

Patent Documents

Patent Document 1: Japanese Patent Application Laid-Open (JP-A) No. 17657/98
Patent Document 2: Japanese Patent Application Laid-Open (JP-A) No. 2003-192778
Patent Document 3: Japanese Patent No. 4244067
Patent Document 4: Japanese Patent Application Laid-Open (JP-A) No. 2008-308635
Patent Document 5: Japanese Patent No. 5481916

Disclosure of the Invention

Problem that the Invention is to Solve

The present invention has been made in order to overcome the problems of the conventional flame-retardant thermoplastic polyester elastomer resin compositions described above. An object of the present invention is to provide a flame-retardant thermoplastic polyester elastomer resin composition which has excellent extrusion moldability as well as heat resistance, weather resistance, heat aging resistance, water resistance, low-temperature characteristics, and the like, and from which a hollow and long molded article such as a cable and a hose can be produced with a uniform thickness and with high accuracy.

Means for Solving the Problem

In order to achieve the above object, the present inventors have extensively conducted studies particularly on a method for preventing the problem of viscosity increase during extrusion molding of a resin composition in which a flame retardant and a polycarbodiimide are further blended in a conventional thermoplastic polyester elastomer in which an aliphatic carbonate is used as a soft segment. As a result, the present inventors have found that extrusion moldability can be improved by suitably controlling the melt flow rate (MFR) of the thermoplastic polyester elastomer resin composition and the change in the melt flow rate over time (ΔMFR) within specific ranges.

The present invention has been achieved on the basis of the above findings and has the constituent features of the following (1) to (5).

(1) A flame-retardant thermoplastic polyester elastomer resin composition comprising 50 to 94 mass% of a thermoplastic polyester elastomer and 1 to 45 mass% of a flame retardant, wherein the thermoplastic polyester elastomer comprises a hard segment made of a polyester constituted of an aromatic dicarboxylic acid and an aliphatic or alicyclic diol and a soft segment mainly made of an aliphatic polycarbonate, wherein the hard segment and the soft segment are bonded to each other, and wherein the thermoplastic polyester elastomer is at least partially end-capped with a polycarbodiimide,

characterized in that a melt flow rate (MFR) value of the flame-retardant thermoplastic polyester elastomer resin composition is 2 to 15 g/10 min as measured at 230°C under a load of 2.16 kg in accordance with a flow test method for thermoplastics specified in JIS K 7210, and
a difference (ΔMFR: MFR35 - MFR5) between an MFR value (MFR35) at 35 minutes and an MFR value (MFR5) at 5 minutes after the flame-retardant thermoplastic polyester elastomer resin composition is added is 0 to 20 g/10 min.

(2) The flame-retardant thermoplastic polyester elastomer resin composition according to (1), wherein, when a cycle in which a temperature of the thermoplastic polyester elastomer is raised from room temperature to 300°C at a temperature raising rate of 20°C/min, held at 300°C for 3 minutes, and then lowered to room temperature at a temperature lowering rate of 100°C/min using a differential scanning calorimeter is repeated 3 times, a difference in melting point (Tm1 - Tm3) between a melting point (Tm1) obtained in a first measurement and a melting point (Tm3) obtained in a third measurement is 0 to 50°C.
(3) The flame-retardant thermoplastic polyester elastomer resin composition according to (1) or (2), wherein an acid value of the thermoplastic polyester elastomer is 15 eq/ton or less.
(4) A molded article obtained by extrusion molding of the flame-retardant thermoplastic polyester elastomer resin composition according to any one of (1) to (3).
(5) The molded article according to (4), wherein the molded article is a cable or a hose.

Effects of the Invention

The flame-retardant thermoplastic polyester elastomer resin composition of the present invention satisfies basic performance requirements for parts of automobiles and home electric appliances, such as heat resistance, weather resistance, heat aging resistance, water resistance, and low-temperature characteristics, and is also excellent in extrusion moldability, so that it is possible to produce, with high accuracy, a hollow and long molded article required to have a uniform thickness such as a cable and a hose.

Mode for Carrying Out the Invention

The flame-retardant thermoplastic polyester elastomer resin composition of the present invention is based on a thermoplastic polyester elastomer comprising a hard segment made of a polyester constituted of an aromatic dicarboxylic acid and an aliphatic or alicyclic diol and a soft segment mainly made of an aliphatic polycarbonate, wherein the hard segment and the soft segment are bonded to each other. The flame-retardant thermoplastic polyester elastomer resin composition of the present invention is characterized in that the thermoplastic polyester elastomer is at least partially end-capped with a polycarbodiimide and compounded with flame retardant, and that the flame-retardant thermoplastic polyester elastomer resin composition has a melt flow rate (MFR) and the change in the melt flow rate over time (ΔMFR) within specific ranges.

First, the hard segment of the thermoplastic polyester elastomer will be described. This hard segment is made of a polyester constituted of an aromatic dicarboxylic acid and an aliphatic or alicyclic diol.

Among the constituent components of the polyester of the hard segment of the thermoplastic polyester elastomer, an ordinary aromatic dicarboxylic acid is widely used as the aromatic dicarboxylic acid, and the aromatic dicarboxylic acid is not particularly limited but is desirably mainly terephthalic acid or naphthalenedicarboxylic acid. Examples of other acid components include: aromatic dicarboxylic acids such as biphenyldicarboxylic acid, isophthalic acid, and sodium 5-sulfoisophthalate; alicyclic dicarboxylic acids such as cyclohexanedicarboxylic acid and tetrahydrophthalic anhydride; and aliphatic dicarboxylic acids such as succinic acid, glutaric acid, adipic acid, azelaic acid, sebacic acid, dodecanedioic acid, dimer acids, and hydrogenated dimer acids. These are used in a range in which the melting point of the resin is not significantly lowered, and the amount thereof is preferably less than 30 mol%, and more preferably less than 20 mol%, of the total acid components.

Among the constituent components of the polyester of the hard segment of the thermoplastic polyester elastomer, an ordinary aliphatic or alicyclic diol is widely used as the aliphatic or alicyclic diol, and the aliphatic or alicyclic diol is not particularly limited but is desirably mainly an alkylene glycol having two to eight carbon atoms. Specific examples thereof include ethylene glycol, 1,3-propylene glycol, 1,4-butanediol, 1,6-hexanediol, and 1,4-cyclohexanedimethanol. Among them, 1,4-butanediol and 1,4-cyclohexanedimethanol are most preferable.

Specifically, the component constituting the polyester of the hard segment of the thermoplastic polyester elastomer is preferably composed of a butylene terephthalate unit or a butylene naphthalate unit from the viewpoint of physical properties, moldability, and cost performance.

The polyester constituting the hard segment of the thermoplastic polyester elastomer can be easily obtained according to an ordinary method for producing polyester. Such a polyester desirably has a number average molecular weight of 10,000 to 40,000.

Next, the soft segment of the thermoplastic polyester elastomer will be described. This soft segment is mainly made of an aliphatic polycarbonate. Here, the term "mainly" means that the aliphatic polycarbonate accounts for 60 mass% or more, preferably 80 mass% or more, and more preferably 90 mass% or more, of the soft segment.

The aliphatic polycarbonate constituting the soft segment of the thermoplastic polyester elastomer is preferably mainly made of an aliphatic diol residue having 2 to 12 carbon atoms. Examples of such an aliphatic diol include ethylene glycol, 1,3-propylene glycol, 1,4-butanediol, 1,5-pentanediol, 1,6-hexanediol, 1,8-octanediol, 2,2-dimethyl-1,3-propanediol, 3-methyl-1,5-pentanediol, 2,4-diethyl-1,5-pentanediol, 1,9-nonanediol, and 2-methyl-1,8-octanediol. In particular, an aliphatic diol having 5 to 12 carbon atoms is preferable from the viewpoint of flexibility and low-temperature characteristics of the polyester elastomer resin composition to be obtained. These components may be used singly, or two or more kinds thereof may be used in combination as necessary.

As to the aliphatic polycarbonate diol having good low-temperature characteristics and constituting the soft segment of the thermoplastic polyester elastomer, an aliphatic polycarbonate diol having a low melting point (such as 70°C or lower) and a low glass transition temperature is preferable. In general, an aliphatic polycarbonate diol made of 1,6-hexanediol used for forming a soft segment of a thermoplastic polyester elastomer has a low glass transition temperature of about -60°C and a melting point of about 50°C and therefore has good low-temperature characteristics. In addition, an aliphatic polycarbonate diol obtained by copolymerizing an appropriate amount of, for example, 3-methyl-1,5-pentanediol with the above aliphatic polycarbonate diol has a glass transition point slightly higher than that of the original aliphatic polycarbonate diol, but has a lower melting point or becomes amorphous, and thus corresponds to an aliphatic polycarbonate diol having good low-temperature characteristics. In addition, for example, since an aliphatic polycarbonate diol made of 1,9-nonanediol and 2-methyl-1,8-octanediol has a melting point of about 30°C and a glass transition temperature of about -70°C, which are sufficiently low, the aliphatic polycarbonate diol corresponds to an aliphatic polycarbonate diol having good low-temperature characteristics.

The aliphatic polycarbonate diol is not necessarily composed of only a polycarbonate component but may be obtained by copolymerization with a small amount of other glycol, dicarboxylic acid, ester compound, ether compound, or the like. Examples of the copolymerization component include glycols such as dimer diols, hydrogenated dimer diols, and modified products thereof, dicarboxylic acids such as dimer acids and hydrogenated dimer acids, polyesters or oligoesters made of aliphatic, aromatic, or alicyclic dicarboxylic acids and glycols, polyesters or oligoesters composed of ε-caprolactone and the like, and polyalkylene glycols such as polytetramethylene glycol and polyoxyethylene glycol or oligoalkylene glycols.

The copolymerization component can be used in such an amount that the effect of the aliphatic polycarbonate segment is not substantially lost. Specifically, the amount is 40 parts by mass or less, preferably 30 parts by mass or less, and more preferably 20 parts by mass or less, with respect to 100 parts by mass of the aliphatic polycarbonate segment. When the amount of the copolymerization component is too large, the resulting polyester elastomer resin composition may be poor in heat aging resistance and water resistance.

In the thermoplastic polyester elastomer, the mass ratio of the polyester constituting the hard segment, the aliphatic polycarbonate constituting the soft segment, and the copolymer component as desired is generally such that hard segment : soft segment = 30 : 70 to 95 : 5, preferably 40 : 60 to 90 : 10, more preferably 45 : 55 to 87 : 13, and most preferably 50 : 50 to 85 : 15.

As explained above, the thermoplastic polyester elastomer is a thermoplastic polyester elastomer comprising a hard segment made of a polyester constituted of an aromatic dicarboxylic acid and an aliphatic or alicyclic diol and a soft segment mainly made of an aliphatic polycarbonate, wherein the hard segment and the soft segment are bonded to each other. Here, the term "bonded" preferably indicates not a state in which the hard segment and the soft segment are bonded with a chain extender such as an isocyanate compound, but a state in which units constituting the hard segment and the soft segment are directly bonded by ester bonds or carbonate bonds. In order to produce such a state, for example, it is preferable to obtain the thermoplastic polyester elastomer through a blocking reaction in which transesterification reactions and depolymerization reactions of the polyester constituting the hard segment, the polycarbonate constituting the soft segment, and various copolymerization components as desired are repeated for a certain period of time in a molten state.

The blocking reaction is preferably performed at a temperature within a range from the melting point of the polyester constituting the hard segment to a temperature higher than the melting point by 30°C. In this reaction, the active catalyst concentration in the system is arbitrarily set according to the temperature at which the reaction is performed. That is, since the transesterification reaction and the depolymerization rapidly proceed at a higher reaction temperature, it is desirable that the active catalyst concentration in the system is low. In the meantime, it is desirable that a certain concentration of the active catalyst is present at a lower reaction temperature.

As to the catalyst, those that are usually employed, such as one kind or two or more kinds of titanium compounds such as titanium tetrabutoxide and potassium oxalate titanate and tin compounds such as dibutyltin oxide and monohydroxybutyltin oxide can be used. The catalyst may be already present in the polyester or polycarbonate, in which case no fresh addition is required. Furthermore, the catalyst in the polyester or polycarbonate may have been partially or substantially completely deactivated in advance by any method. For example, when titanium tetrabutoxide is used as the catalyst, deactivation is performed by adding a phosphorus compound or the like such as phosphorous acid, phosphoric acid, triphenyl phosphate, tristriethylene glycol phosphate, orthophosphoric acid, carbethoxydimethyldiethyl phosphonate, triphenyl phosphite, trimethyl phosphate, and trimethyl phosphite, but this method is not limiting.

The above reaction can be performed by arbitrarily determining the combination of the reaction temperature, the catalyst concentration, and the reaction time. That is, since the reaction conditions may vary depending on various factors such as the types and amount ratios of the hard segment and the soft segment to be used, the shape of the device to be used, and the stirring situation, the optimum values thereof may be appropriately adopted.

The optimum values of the above reaction conditions exist, for example, when the melting point of the obtained chain-extended polymer is compared with the melting point of the polyester used as the hard segment, and the difference is 2°C to 60°C. If the difference in melting point is less than 2°C, both segments are not mixed or/and reacted, and the resulting polymer may exhibit poor elastic performance. On the other hand, when the difference in melting point exceeds 60°C, the progress of the transesterification reaction is remarkable, so that the blocking property of the obtained polymer may be impaired, and the crystallinity, the elastic performance, and the like may be impaired.

It is desirable that the remaining catalyst in the molten mixture obtained by the above reaction is deactivated as completely as possible by a conventionally known method. When the catalyst remains more than necessary, the transesterification reaction further proceeds during compounding, molding, or the like, and the physical properties of the obtained polymer may fluctuate.

For example, the deactivation reaction is carried out by the method described above, that is, addition of a phosphorus compound or the like such as phosphorous acid, phosphoric acid, triphenyl phosphate, tristriethylene glycol phosphate, orthophosphoric acid, carbethoxydimethyldiethyl phosphonate, triphenyl phosphite, trimethyl phosphate, and trimethyl phosphite, but this method is not limiting.

The thermoplastic polyester elastomer may contain only a small amount of a tri- or higher functional polycarboxylic acid or a tri- or higher hydric polyol. For example, trimellitic anhydride, benzophenonetetracarboxylic acid, trimethylolpropane, glycerol, or the like can be used.

In the thermoplastic polyester elastomer used in the present invention, it is important that, when a cycle in which a temperature of the thermoplastic polyester elastomer is raised from room temperature to 300°C at a temperature raising rate of 20°C/min, held at 300°C for 3 minutes, and then lowered to room temperature at a temperature lowering rate of 100°C/min using a differential scanning calorimeter is repeated 3 times, a difference in melting point (Tm1 - Tm3) between a melting point (Tm1) obtained in a first measurement and a melting point (Tm3) obtained in a third measurement is 0 to 50°C. This difference in melting point is preferably 0 to 40°C, and more preferably 0 to 30°C. This difference in melting point is a measure of ability of the thermoplastic polyester elastomer to retain a blocking property. The smaller the difference is, the better the ability to retain a blocking property is. When the difference in melting point exceeds 50°C, the ability to retain a blocking property may be impaired, and the quality fluctuation during molding processing may increase, leading to deterioration of uniformity of the quality of the molded article and deterioration of recyclability.

By satisfying the above characteristics, it is possible to obtain a molded article effectively utilizing the effect of the excellent blocking property of the thermoplastic polyester elastomer.

The method for setting the ability to retain a blocking property and the blocking property of the thermoplastic polyester elastomer within the above ranges is not limited, but it is preferable to optimize the molecular weight of the polycarbonate diol used as a raw material. That is, the thermoplastic polyester elastomer is preferably produced by reacting a polyester constituting the hard segment with an aliphatic polycarbonate diol having a molecular weight of 5,000 to 80,000 in a molten state. The larger the molecular weight of the aliphatic polycarbonate diol is, the higher the ability to retain a blocking property and the blocking property are. The molecular weight of the aliphatic polycarbonate diol is preferably 5,000 or more, more preferably 7,000 or more, and furthermore preferably 10,000 or more, in terms of number average molecular weight. The upper limit of the molecular weight of the aliphatic polycarbonate diol is preferably 80,000 or less, more preferably 70,000 or less, and furthermore preferably 60,000 or less, from the viewpoint of compatibility between the hard segment and the soft segment. If the molecular weight of the aliphatic polycarbonate diol is too large, compatibility is reduced, and phase separation occurs, which greatly affects the mechanical properties of the molded article and reduces the strength and elongation of the molded article.

The method for optimizing the molecular weight of the aliphatic polycarbonate diol is not limited. One having an optimum molecular weight may be purchased or prepared, or one having a molecular weight adjusted in advance by increasing the molecular weight of an aliphatic polycarbonate diol having a low molecular weight with a chain extender such as diphenyl carbonate and a diisocyanate may be used.

For example, as to a method for producing the above-mentioned high molecular weight aliphatic polycarbonate diol, the above-mentioned high molecular weight aliphatic polycarbonate diol can be obtained by reacting the above-mentioned aliphatic diol with the following carbonate, that is, dimethyl carbonate, diethyl carbonate, dipropyl carbonate, diisopropyl carbonate, dibutyl carbonate, dimethyl carbonate, diphenyl carbonate, and the like.

As to another method for producing the high molecular weight aliphatic polycarbonate diol, it is also possible to react an aliphatic polycarbonate diol having a low molecular weight with dimethyl carbonate, diethyl carbonate, dipropyl carbonate, diisopropyl carbonate, dibutyl carbonate, dimethyl carbonate, diphenyl carbonate, or the like.

In the present invention, the thermoplastic polyester elastomer is at least partially end-capped with a polycarbodiimide. Hereinafter, the thermoplastic polyester elastomer in this state is referred to as an "end-capped thermoplastic polyester elastomer". By at least partially end-capping the end groups (hydroxyl groups or carboxyl groups) of the thermoplastic polyester elastomer with the reactive functional group in the polycarbodiimide, it is possible to increase the molecular weight of and/or impart branching to the thermoplastic polyester elastomer and to effectively reduce the acid value of the thermoplastic polyester elastomer, and thus it is possible to control the MFR, ΔMFR, extrusion moldability, heat resistance, and heat aging resistance of the thermoplastic polyester elastomer resin composition.

In the present invention, the phrase "the thermoplastic polyester elastomer is at least partially end-capped with a polycarbodiimide" means that not "all" of the end groups of the thermoplastic polyester elastomer are required to be capped with a polycarbodiimide. The present invention is based on the assumption that "most" of the end groups of the thermoplastic polyester elastomer are capped with a polycarbodiimide, and a state of a composition in which a free polycarbodiimide is mixed is also included. This is because it is difficult to cap "all" of the end groups of the thermoplastic polyester elastomer with a polycarbodiimide even if the polycarbodiimide is excessively added or the method for adding the polycarbodiimide is devised as described later. Although it is difficult to directly measure the end-capping ratio of the thermoplastic polyester elastomer, it can be estimated using the acid value of the thermoplastic polyester elastomer as an index. As the thermoplastic polyester elastomer becomes end-capped, the acid value of the thermoplastic polyester elastomer is reduced to a value lower than the acid value of the original thermoplastic polyester elastomer.

In the present invention, the polycarbodiimide has a role of imparting branching to the thermoplastic polyester elastomer or increasing the molecular weight of the thermoplastic polyester elastomer by end-capping the thermoplastic polyester elastomer so as to control the MFR of the thermoplastic polyester elastomer resin composition within a suitable range; and a role of reducing the acid value of the thermoplastic polyester elastomer by end-capping the thermoplastic polyester elastomer so as to control the ΔMFR of the thermoplastic polyester elastomer resin composition within a suitable range. As a result, the extrusion moldability, heat resistance, and heat aging resistance of the thermoplastic polyester elastomer resin composition are improved. It is sufficient that the polycarbodiimide that can be used in the present invention is a polycarbodiimide having two or more carbodiimide groups (-N=C=N- structure) in one molecule, and examples thereof include aliphatic polycarbodiimides, alicyclic polycarbodiimides, aromatic polycarbodiimides, and copolymers thereof. An aliphatic polycarbodiimide or an alicyclic polycarbodiimide is preferable.

The polycarbodiimide can be obtained, for example, by a carbon dioxide removal reaction of a diisocyanate compound. Examples of the diisocyanate compound that can be used here include 4,4'-diphenylmethane diisocyanate, 4,4'-diphenyldimethylmethane diisocyanate, 1,3-phenylene diisocyanate, 1,4-phenylene diisocyanate, 2,4-tolylene diisocyanate, 2,6-tolylene diisocyanate, 1,5-naphthylene diisocyanate, hexamethylene diisocyanate, dicyclohexylmethane diisocyanate, cyclohexane-1,4-diisocyanate, xylylene diisocyanate, isophorone diisocyanate, methylcyclohexane diisocyanate, tetramethylxylylene diisocyanate, and 1,3,5-triisopropylphenylene-2,4-diisocyanate. These may be used singly or in combination of two or more. In addition, a branched structure may be introduced, or a functional group other than a carbodiimide group and an isocyanate group may be introduced by copolymerization. Furthermore, the terminal isocyanate can be used as it is, but the degree of polymerization may be controlled by reacting the terminal isocyanate, or a part of the terminal isocyanate may be capped.

The polycarbodiimide preferably includes an isocyanate group at a terminal, and the isocyanate group content is preferably 0.5 to 4 mass% from the viewpoint of stability and handleability. More preferably, the isocyanate group content is 1 to 3 mass%. In particular, a polycarbodiimide derived from dicyclohexylmethane diisocyanate or isophorone diisocyanate and having an isocyanate group content in the above range is preferable. The isocyanate group content can be measured using a conventional method (a method of dissolving the polycarbodiimide with an amine and performing back titration with hydrochloric acid).

The polycarbodiimide preferably contains 2 to 50 carbodiimide groups per molecule from the viewpoint of stability and handleability. More preferably, the polycarbodiimide contains 5 to 30 carbodiimide groups per molecule. The number of carbodiimide groups in the polycarbodiimide molecule (that is, the carbodiimide group number) corresponds to the degree of polymerization in the case of a polycarbodiimide obtained from a diisocyanate compound. For example, the polymerization degree of a polycarbodiimide obtained by chain-linking 21 units of a diisocyanate compound is 20, and the carbodiimide group number in the molecular chain is 20. Since a polycarbodiimide is usually a mixture of molecules of various lengths, the carbodiimide group number is represented by an average value. When the polycarbodiimide has a carbodiimide group number within the above range and is solid at around room temperature, the polycarbodiimide can be pulverized, and thus the polycarbodiimide is excellent in workability and compatibility at the time of mixing with the thermoplastic polyester elastomer described later and is also preferable in terms of uniform reactivity and bleed out resistance. For example, the carbodiimide group number can be measured using a conventional method (a method of dissolving the polycarbodiimide with an amine and performing back titration with hydrochloric acid). When the polycarbodiimide has such a polymerization degree and is solid at around room temperature, the polycarbodiimide is excellent in workability and compatibility when being pulverized and mixed with the thermoplastic polyester elastomer and is also preferable in terms of uniform reactivity and bleed out resistance.

In the thermoplastic polyester elastomer used in the present invention, a part of the end groups thereof may be capped with a compound having one or more reactive groups reactive with the thermoplastic polyester elastomer, in addition to the polycarbodiimide. The reactive group is a group capable of reacting with a hydroxyl group or a carboxyl group of the thermoplastic polyester elastomer, such as an epoxy group, an oxazoline group, a carbodiimide group, an acid anhydride group, a hydroxymethyl group, an amino group, and a cyclic imino group. Hereinafter, the polycarbodiimide and the compound having one or more reactive groups reactive with the thermoplastic polyester elastomer are collectively referred to as a "reactive compound".

When the compound having one or more reactive groups reactive with the thermoplastic polyester elastomer is an epoxy compound, the structure thereof is not particularly limited, but the compound is a compound having one or more epoxy groups in the same molecule, preferably a compound having 2 or 3 epoxy groups.

Specific examples of the epoxy compound include diglycidyl ethers of bisphenol A, bisphenol F, and bisphenol S and oligomers thereof, diglycidyl ethers of hydrogenated bisphenol A, hydrogenated bisphenol F, and hydrogenated bisphenol S and oligomers thereof, orthophthalic acid diglycidyl ester, isophthalic acid diglycidyl ester, terephthalic acid diglycidyl ester, p-oxybenzoic acid diglycidyl ester, tetrahydrophthalic acid diglycidyl ester, hexahydrophthalic acid diglycidyl ester, succinic acid diglycidyl ester, adipic acid diglycidyl ester, sebacic acid diglycidyl ester, ethylene glycol diglycidyl ether, propylene glycol diglycidyl ether, 1,4-butanediol glycidyl ether, 1,6-hexanediol diglycidyl ether, polyalkylene glycol diglycidyl ethers, trimellitic acid triglycidyl ester, triglycidyl isocyanurate, 14-diglycidyloxybenzene, diglycidylpropyleneurea, glycerol triglycidyl ether, trimethylolethane triglycidyl ether, trimethylolpropane triglycidyl ether, pentaerythritol tetraglycidyl ether, polyglycidyl ethers of glycerol alkylene oxide adducts, glycidyl ether type epoxies such as cresol novolac type glycidyl ethers and phenol novolac type glycidyl ethers, alicyclic epoxies such as 3,4-epoxycyclohexyl methacrylate and cyclopentadiene diepoxide, oligomeric alicyclic epoxies, and triglycidyl isocyanurate. These may be appropriately mixed and used as necessary. Among them, those which are crystalline and can be pulverized are preferable from the viewpoint of homogenization of the reaction and prevention of gel generation. A particularly preferable example is triglycidyl isocyanurate preferably in the form of powder having an average particle diameter of 100 um or less.

Next, an end-capping method using the reactive compound such as a polycarbodiimide will be described. In order to end-cap the thermoplastic polyester elastomer with the reactive compound, it is sufficient that the thermoplastic polyester elastomer and the reactive compound are mixed and brought into contact with each other. The contacting causes the reactive functional groups in the reactive compound to react with the end groups of the thermoplastic polyester elastomer to end-cap the thermoplastic polyester elastomer. The reaction between the end groups of the thermoplastic polyester elastomer and the reactive functional group in the reactive compound can occur without a catalyst, but it is desirable to use a catalyst from the viewpoint of accelerating the reaction. As to the catalyst, generally, amines, imidazoles, and the like are preferable.

When the reactive compound is a polycarbodiimide, the blending amount thereof is preferably 0.5 to 10 parts by mass, and more preferably 0.5 to 5 parts by mass, with respect to 100 parts by mass of the thermoplastic polyester elastomer. When the content is more than the above upper limit, flexibility may be impaired, or mechanical characteristics, heat resistance, and melt viscosity may be reduced. When the content is less than the lower limit, the amount of -N=C=N- in the thermoplastic polyester elastomer is reduced, and the effect of improving hydrolysis resistance and the effect of improving extrusion moldability may be poor. When the reactive compound is a compound having one or more reactive groups reactive with the thermoplastic polyester elastomer, the blending amount thereof is preferably 0.01 to 5 parts by mass, and more preferably 0.05 to 4 parts by mass, with respect to 100 parts by mass of the thermoplastic polyester elastomer. When the amount is less than the above lower limit, the operation and effect obtained by reacting such a compound, such as the effect of improving moldability by increasing the viscosity and the effect of improving heat resistance and hydrolysis resistance, may not be significantly exhibited. When the amount is more than the above upper limit, the unreacted compound remains, so that the quality of the molded article may be adversely affected, for example, the surface property of the molded article becomes coarse or a gelled product is generated.

In order to ensure that the blended reactive compound such as a polycarbodiimide can be in contact with and react with the end groups of the thermoplastic polyester elastomer, it is preferable to devise the order in the method for adding the reactive compound to the thermoplastic polyester elastomer. For example, instead of simultaneously mixing all of the thermoplastic polyester elastomer, the reactive compound, and an additive such as a flame retardant as described later as in the conventional case, the reactive compound is previously added and attached to a part of the thermoplastic polyester elastomer, on the other hand, the remaining thermoplastic polyester elastomer and the additive are mixed and melted, and the thermoplastic polyester elastomer to which the reactive compound has been added and attached is added to the melt, whereby the reactive compound can be uniformly melt-kneaded, and the reactive compound can be reliably brought into contact and react with the end groups of the thermoplastic polyester elastomer. Therefore, excessive blending of the polycarbodiimide can be suppressed, and adjustment to the target MFR and ΔMFR is facilitated. If the reactive compound is not melt-kneaded uniformly, the end groups of the thermoplastic polyester elastomer are not sufficiently capped. In addition, the unreacted reactive compound remains in the composition and may adversely affect the extrusion process. Specifically, when part of the thermoplastic polyester elastomer that is not end-capped is present, thermal decomposition or hydrolysis is likely to occur in residence during prolonged extrusion molding, and there is a possibility that the molecular weight is reduced or the melt viscosity is reduced. When the unreacted reactive compound is present, gelation may occur, and the melt viscosity may be likely to increase.

The end-capped thermoplastic polyester elastomer thus obtained has a lower acid value than the original thermoplastic polyester elastomer because the terminal acid groups are capped. Specifically, a low level of acid value of 15 eq/ton or less, preferably 10 eq/ton or less, and more preferably 5 eq/ton or less, can be achieved. The lower limit of the acid value is not particularly limited but is, for example, 0 eq/ton. When the acid value is in the above range, the increase of ΔMFR can be suppressed, and in the case of extrusion molding of a hollow and long object such as a cable and a hose, the thickness uniformity is improved. The acid value also contributes to hydrolysis resistance, and when the acid value is in the above range, hydrolysis resistance is excellent.

In the present invention, the end-capped thermoplastic polyester elastomer is used in the form of a flame-retardant resin composition in combination with a flame retardant. As to the flame retardant, halogen-based or non-halogen-based flame retardants and flame retardant coagents can be used, and these may be used singly or in combination. Examples of the flame retardant include triazine-based compounds and/or derivatives thereof, phosphorus-based compounds, bromine-based compounds, and antimony compounds. The flame retardant can be contained in an amount of 1 to 40 mass% in the resin composition.

Examples of the triazine-based compound and/or a derivative thereof include melamine, melamine cyanurate, melamine phosphate, and guanidine sulfamate. Examples of the phosphorus-based compound include red phosphorus-based compounds and ammonium polyphosphate salts. Examples of the bromine-based compound include brominated phenoxy resins, brominated epoxy resins, brominated epoxy oligomers, TBA carbonate oligomers, ethylenebis(tetrabromophthal)imide, hexabromobenzene, and decabromodiphenyl ether. Examples of the flame retardant coagent include antimony trioxide, antimony tetraoxide, antimony pentoxide, sodium pyroantimonate, tin dioxide, zinc metaborate, aluminum hydroxide, magnesium hydroxide, zirconium oxide, molybdenum oxide, red phosphorus-based compounds, ammonium polyphosphate salts, melamine cyanurate, and ethylene tetrafluoride.

In the resin composition of the present invention, the blending ratio of the end-capped thermoplastic polyester elastomer and the flame retardant needs to be 1 to 45 mass% of the flame retardant with respect to 50 to 94 mass% of the end-capped thermoplastic polyester elastomer, and is preferably 11 to 35 mass% of the flame retardant with respect to 60 to 84 mass% of the end-capped thermoplastic polyester elastomer. When the blending ratio of the end-capped thermoplastic polyester elastomer is less than the above lower limit, heat resistance and the like may be poor, and on the other hand, when the blending ratio of the end-capped thermoplastic polyester elastomer is more than the above upper limit, the blending ratio of the flame retardant is too low, and the flame retardancy may be poor.

Furthermore, various additives can be blended in the resin composition of the present invention according to the purpose. Examples of the additive include known hindered phenol-based, sulfur-based, phosphorus-based, and amine-based antioxidants, hindered amine-based, triazole-based, benzophenone-based, benzoate-based, nickel-based, and salicyl-based light stabilizers, antistatic agents, lubricants, molecular modifiers such as peroxides, compounds having a reactive group such as epoxy-based compounds and carbodiimide-based compounds, metal inactivators, organic and inorganic nucleating agents, neutralizing agents, antacid agents, antibacterial agents, optical brighteners, fillers, and organic and inorganic pigments. It is preferable that these additives are contained in the resin composition in a total amount of 0 to 5 mass%, and more preferably 0.5 to 5 mass%.

These additives can be blended using a kneader such as a heating roll, an extruder, or a Banbury mixer. In addition, the additives can be added to and mixed with the oligomer before the transesterification reaction or before the polycondensation reaction when the thermoplastic polyester elastomer is produced.

The resin composition of the present invention can be produced by mixing the above-described components and, if necessary, various stabilizers, pigments, and the like, and melt-kneading the mixture. As to the melt-kneading method, any method known to those skilled in the art may be used, and a single-screw extruder, a twin-screw extruder, a pressure kneader, a Banbury mixer, or the like can be used. Among them, a twin-screw extruder is preferably used.

As described above, in order to ensure that the reactive compound such as a polycarbodiimide can reliably contact and react with the end groups of the thermoplastic polyester elastomer, instead of simultaneously mixing all the components, it is preferable that the reactive compound is previously added and attached to a part of the thermoplastic polyester elastomer, on the other hand, the remaining thermoplastic polyester elastomer and the additives are mixed and melted, and the thermoplastic polyester elastomer to which the reactive compound has been added and attached is added from a side feeder. When such a charging method is employed, the reactive compound does not adhere to the production device, and the charging loss of the reactive compound can be prevented.

In the flame-retardant thermoplastic polyester elastomer resin composition of the present invention, an MFR value thereof is preferably 2 to 15 g/10 min, and more preferably 2 to 12 g/10 min, as measured at 230°C under a load of 2.16 kg in accordance with a flow test method for thermoplastics specified in JIS K 7210. When the MFR value is less than 2 g/10 min or exceeds 15 g/10 min, extrusion molding cannot be performed.

In addition, a difference (ΔMFR: MFR35 - MFR5) between an MFR value (MFR35) at 35 minutes and an MFR value (MFR5) at 5 minutes after the resin composition is added is preferably 0 to 20, and more preferably 0 to 15. When the ΔMFR is more than 20, a decrease in melt viscosity is not suppressed at the time of molding, and stable extrusion molding cannot be performed, so that the thickness becomes uneven when a cable or a hose is molded. On the other hand, when the value is less than 0, the melt viscosity significantly increases at the time of molding, and stable moldability cannot be obtained similarly.

The method for adjusting the MFR value and ΔMFR within the above ranges is not particularly limited, but in particular, as described above, it is preferable to blend a predetermined amount of a reactive compound such as a polycarbodiimide by a specific method. This makes it possible to control the acid value of the polyester elastomer resin composition within a predetermined range and adjust the MFR value and ΔMFR to the above ranges. In addition, the MFR value and ΔMFR can be appropriately adjusted according to the acid value of the polyester elastomer, the number of reactive groups of the reactive compound, viscosity increasing characteristics such as the molecular weight, an increase in acid value due to the decomposition reaction of the polyester elastomer by the flame retardant, reactivity with other additives, and the like. When an epoxy compound (glycidyl compound) is used in combination with the polycarbodiimide as the reactive compound, an unreacted reactive compound tends to remain in the resin composition. This unreacted reactive compound has an effect of increasing the molecular weight by reacting with the polyester elastomer in the residence during molding and contributes to a decrease in the MFR and ΔMFR. On the other hand, when an unreacted reactive compound is present, long-term extrusion moldability may be impaired, for example, the difference between the initial thickness and the final thickness becomes large.

Since the flame-retardant resin composition containing the end-capped thermoplastic polyester elastomer of the present invention is configured as described above, they have excellent extrusion moldability and extrusion molding stability as well as heat resistance, weather resistance, heat aging resistance, water resistance, low-temperature characteristics, and the like and can be used for producing a hollow and long molded article such as a cable and a hose with a uniform thickness by extrusion molding.

Examples

Hereinafter, the present invention will be specifically described with reference to examples and comparative examples, but the present invention is not limited by the following examples as a matter of course, and modifications can be made within a range that can conform to the gist described above and below, and all of them are included in the technical scope of the present invention. In the present specification, each measurement was performed according to the following method.

(1) Melting point (Tm) of thermoplastic polyester elastomer

While the temperature of the thermoplastic polyester elastomer that had been dried under reduced pressure at 50°C for 15 hours was raised from room temperature at 20°C/min using a differential scanning calorimeter DSC-50 (manufactured by Shimadzu Corporation), the endothermic peak temperature due to melting was measured and defined as the melting point (Tm) . On an aluminum pan (manufactured by TA Instruments, product number 900793.901), 10 mg of the sample was weighed, sealed with an aluminum lid (manufactured by TA Instruments, product number 900794.901), and measured in an argon atmosphere.

(2) Reduced viscosity of thermoplastic polyester elastomer

In 25 mL of a mixed solvent (phenol/tetrachloroethane = 60/40), 0.05 g of the thermoplastic polyester elastomer was dissolved, and the reduced viscosity was measured at 30°C using an Ostwald viscometer.

(3) Acid value

In 100 ml of benzyl alcohol/chloroform (50/50 mass ratio), 0.5 g of the thermoplastic polyester elastomer was dissolved, and the solution was titrated with an ethanol solution of KOH so as to determine the acid value. Phenol red was used as an indicator. The acid value was expressed as an equivalent (eq/ton) in 1 ton of the resin.

(4) Melt flow rate (Abbreviation: MFR, Also Referred to as Melt flow index)

The MFR (g/10 min) of pellets of each of flame-retardant thermoplastic polyester elastomer resin compositions obtained in examples and comparative examples was measured at 230°C and a load of 2.16 kg in accordance with the test method (Method A) described in JIS K 7210 (ASTM D1238) . For the measurement, a resin composition having a moisture content of 0.1 wt% or less was used. In addition, the difference ($\Delta$MFR: MFR35 - MFR5) between the MFR value (MFR35) at 35 minutes and the MFR value (MFR5) at 5 minutes after the addition of the resin composition was measured. For the measurement, a resin composition having a moisture content of 0.1 parts by weight or less was used.

(5) Extrusion moldability

The extrusion moldability was evaluated in terms of fluctuations in discharge amount and smoothness.

[Extrusion moldability (fluctuations in discharge amount)]

The pellets melt-kneaded with a twin-screw extruder were extruded again from a round die with a single-screw extruder, and strands having a diameter of 3 mm were discharged. From this state, the extrusion moldability (fluctuations in discharge amount) was evaluated according to the following criteria.

∘: There is no fluctuation in the discharge amount, and the extrudability is stable.
Δ: The discharge amount is stable when the strands are pulled at a constant speed using a take-up machine, but when the strands are suspended by their own weight, fluctuations in the discharge amount are slightly observed.
✕: The discharge amount greatly fluctuates, and taking off of the strands is not possible.

[Extrusion moldability (smoothness)]

The pellets melt-kneaded with a twin-screw extruder were extrusion-molded again from a T-die with a single-screw extruder so as to produce a sheet molded article having a thickness of 0.2 mm. From the sheet appearance, the smoothness of the extruded article was evaluated according to the following criteria.

○: There is no occurrence of roughness or foaming, and the sheet appearance and surface smoothness are good.

×: Sheet unevenness (melt fracture) and foaming occur, and the sheet appearance is not good.

(6) Flame retardancy

To a thermoplastic polyester elastomer dried under reduced pressure at 100°C for 8 hours, 0.5 mass% of pentaerythrityl-tetrakis[3-(3,5-di-t-butyl-4-hydroxyphenyl) propionate], 0.3 mass% of pentaerythritol tetrakis(3-laurylthiopropionate), 0.5 mass% of 2-(3-t-butyl-5-methyl-2-hydroxyphenyl)benzotriazole, 0.5 mass% of bisphenol A, 0.3 mass% of triphenylphosphine, and compounds described in examples and comparative examples were blended, and the mixture was granulated using an extruder so as to obtain a flame-retardant polyester elastomer resin composition.

Using an injection molding machine (model-SAV, manufactured by Sanjo Seiki Co., Ltd.), the thermoplastic polyester elastomer composition was injection-molded at a cylinder temperature (Tm + 20°C) so as to obtain a 1/32-inch test piece conforming to the UL-94 standard.

The flame retardancy of the test piece obtained by the above method was evaluated in accordance with UL-94. The combustion time was shown as the sum of the combustion times after two flame contacts of each of five samples.

(7) Heat resistance and heat aging resistance

A flat plate of 100 mm × 100 mm × 2 mm was prepared by injection-molding at a cylinder temperature (Tm + 20°C) and a mold temperature of 30°C using an injection molding machine (model-SAV, manufactured by Sanjo Seiki Co., Ltd.). From the prepared flat plate, the type 3 dumbbell-shaped test piece was punched out as a test piece. This type 3 dumbbell-shaped test piece was allowed to stand in an environment of 170°C for an arbitrary time and then taken out, and the tensile elongation at break was measured in accordance with JIS K 6251: 2010. The retention rate of tensile elongation at break was calculated according to the following formula, and the time at which the rate reached 50% (tensile elongation half-life) was used as an index of heat resistance and heat aging resistance. The initial tensile elongation at break is a tensile elongation at break before the heat resistance and heat aging resistance test.

$$\text{Retention rate of tensile elongation at break (\%) =}$$
$$\text{(tensile elongation at break after heat resistance and heat}$$
$$\text{aging resistance test)/(initial tensile elongation at break)}$$
$$\times 100$$

○: The tensile elongation half-life is 800 hr or more.

Δ: The tensile elongation half-life is 400 hr or more and less than 800 hr.

×: The tensile elongation half-life is less than 400 hr.

(8) Tensile strength at break and tensile elongation at break of flame-retardant thermoplastic polyester elastomer resin composition

Measurement was performed in accordance with JIS K 6251. A flat plate of 100 mm × 100 mm × 2 mm was prepared by injection-molding at a cylinder temperature (Tm + 20°C) and a mold temperature of 30°C using an injection molding machine (model-SAV, manufactured by Sanjo Seiki Co., Ltd.). From the prepared flat plate, the type 3 dumbbell-shaped test piece was punched out as a test piece.

The blended raw materials used in examples and comparative examples were as follows.

[Thermoplastic polyester elastomer]

As to the thermoplastic polyester elastomer, the following three types A-1 to A-3 were synthesized.

Thermoplastic polyester elastomer A-1:

After 100 parts by mass of an aliphatic polycarbonate diol (carbonate diol UH-CARB 200 manufactured by Ube Industries, Ltd., number average molecular weight: 2,000, 1,6-hexanediol type) and 8.6 parts by mass of diphenyl carbonate were charged, the materials were allowed to react at a temperature of 205°C and 130 Pa. After 2 hours, the contents were cooled to obtain an aliphatic polycarbonate diol with an increased molecular weight (number average molecular weight: 10,000). At 230°C to 245°C under 130 Pa, 43 parts by mass of the aliphatic polycarbonate diol (PCD) and 57 parts by mass of polybutylene terephthalate (PBT) having a number average molecular weight of 30,000 were stirred for 1 hour.

It was confirmed that the resin became transparent, and the contents were taken out and cooled to obtain a thermoplastic polyester elastomer A-1. This thermoplastic polyester elastomer A-1 had a melting point of 207°C, a difference in melting point of 20°C, a reduced viscosity of 1.21 dl/g, and an acid value of 44 eq/ton. The composition and physical properties of the obtained thermoplastic polyester elastomer A-1 are shown in Table 1.

Thermoplastic polyester elastomer A-2:

For a comparative example, a thermoplastic polyester elastomer A-2 in which the soft segment was not an aliphatic polycarbonate but an aliphatic polyether was synthesized. Specifically, a thermoplastic polyester elastomer A-2 constituted of terephthalic acid, 1,4-butanediol, and polyoxytetramethylene glycol (PTMG; number average molecular weight: 1,000) and having the ratio hard segment (polybutylene terephthalate) /soft segment (PTMG) = 56/44 (mass%) was obtained in the same method as described above. This thermoplastic polyester elastomer A-2 had a melting point of 203°C, a difference in melting point of 8°C, a reduced viscosity of 1.75 dl/g, and an acid value of 50 eq/ton. The composition and physical properties of the obtained thermoplastic polyester elastomer A-2 are shown in Table 1.

Thermoplastic polyester elastomer A-3:

[0080] [0072] A thermoplastic polyester elastomer A-3 was synthesized in the same manner as for the thermoplastic polyester elastomer A-1 except that the molecular weight increase rate of the aliphatic polycarbonate diol was increased. Specifically, after 100 parts by mass of an aliphatic polycarbonate diol (carbonate diol UH-CARB 200 manufactured by Ube Industries, Ltd., number average molecular weight: 2,000, 1,6-hexanediol type) and 9.6 parts by mass of diphenyl carbonate were charged, the materials were allowed to react at a temperature of 205°C and 130 Pa. After 2 hours, the contents were cooled to obtain an aliphatic polycarbonate diol with an increased molecular weight (number average molecular weight: 20,000). At 230°C to 245°C under 130 Pa, 43 parts by mass of the aliphatic polycarbonate diol (PCD) and 57 parts by mass of polybutylene terephthalate (PBT) having a number average molecular weight of 30,000 were stirred for 1 hour. It was confirmed that the resin became transparent, and the contents were taken out and cooled to obtain a thermoplastic polyester elastomer A-3. This thermoplastic polyester elastomer A-3 had a melting point of 207°C, a difference in melting point of 55°C, a reduced viscosity of 1.25 dl/g, and an acid value of 49 eq/ton. The composition and physical properties of the obtained thermoplastic polyester elastomer A-3 are shown in Table 1.

[Table 1]

| Abbreviation | Composition (mass%) | | | Physical properties | | | |
|---|---|---|---|---|---|---|---|
| | PBT | PTMG | PCD | Melting point (°C) | Difference in melting point (°C) | Acid value (eq/ton) | Melt viscosity (dl/g) |
| A-1 | 57 | | 43 | 207 | 20 | 44 | 1.21 |
| A-2 | 56 | 44 | | 203 | 8 | 50 | 1.75 |
| A-3 | 57 | | 43 | 207 | 55 | 49 | 1.25 |
| PBT: Polybutylene terephthalate PTMG: Poly(tetramethylene oxide) glycol PCD: Aliphatic polycarbonate diol | | | | | | | |

[Polycarbodiimide]

B-1: Alicyclic polycarbodiimide (Carbodilite HMV-15CA, manufactured by Nisshinbo Chemical Inc.)
B-2: Aromatic polycarbodiimide (Stabaxol P, manufactured by Rhein Chemie Rheinau GmbH)

[Glycidyl compound]

B'-1: Triglycidyl isocyanurate compound (TEPIC-S manufactured by Nissan Chemical Corporation, epoxy number (average number of epoxy groups per molecule): 3)

[Flame retardant]

C-1: Brominated polystyrene (PDBS-80, manufactured by Lanxess AG)
C-2: Antimony trioxide (PATOX MK, manufactured by Nihon Seiko Co., Ltd.)
C-3: Aluminum diethylphosphinate (EXOLIT OP1230, manufactured by Clariant Japan K.K.)

[Examples 1 to 7 and Comparative Examples 1 to 6]

The thermoplastic polyester elastomer, the polycarbodiimide, and the flame retardant were mixed at the blending ratio and the method for charging the polycarbodiimide shown in Table 2 so as to obtain a flame-retardant thermoplastic polyester elastomer resin composition. The numerical value indicating the blending ratio in Table 2 means parts by mass. The performance of the obtained flame-retardant thermoplastic polyester elastomer resin composition was evaluated. The results are shown in Table 2. In Table 2, the details of the method of charging the polycarbodiimide (Method A and Method B) are as follows.

Method A: A polycarbodiimide was added and attached to 3 parts by mass of the thermoplastic polyester elastomer, and the thermoplastic polyester elastomer was charged into the molten resin composition from a side feeder.

Method B: The polycarbodiimide was mixed with other components in advance and collectively charged from a hopper.

[Table 2]

| | | | | Example 1 | Example 2 | Example 3 | Example 4 | Example 5 | Example 6 | Example 7 |
|---|---|---|---|---|---|---|---|---|---|---|
| Blending composition of resin composition | Thermoplastic polyester elastomer | A-1 | | 80 | 80 | 80 | 80.4 | 80.1 | 80 | |
| | | A-2 | | | | | | | | |
| | | A-3 | | | | | | | | 80 |
| | Polycarbodiimide | B-1 | | 1.0 | 1.0 | | 0.6 | | | 1.0 |
| | | B-2 | | | | 1.0 | | 0.6 | 0.6 | |
| | Glycidyl compound | B'-1 | | | | | | 0.3 | | |
| | Flame retardant | C-1 | | 15.0 | | | 15.0 | 15.0 | 15.0 | 15.0 |
| | | C-2 | | 4.0 | | | 4.0 | 4.0 | 4.0 | 4.0 |
| | | C-3 | | | 20.0 | 20.0 | | | | |
| | Method for charging the polycarbodiimide | - | | A | A | A | A | A | A | A |
| Performance evaluation | Acid value | eq/ton | | 1 | 2 | 2 | 12 | 9 | 13 | 1 |
| | MFR (2.16 kg, 230°C, 5 min) | g/10 min | | 5 | 6 | 6 | 13 | 9 | 14 | 5 |
| | ΔMFR (2.16 kg, 230°C, Δ 30 min) | g/10 min | | 1 | 3 | 3 | 16 | 10 | 17 | 1 |
| | Extrusion moldability | Fluctuation in the discharge amount | | ○ | ○ | ○ | ○ | ○ | ○ | ○ |
| | | Smoothness | | ○ | ○ | ○ | ○ | ○ | ○ | ○ |
| | Flame retardancy | - | | V-2 | V-2 | V-2 | V-2 | V-2 | V-2 | V-2 |
| | Heat resistance and heat aging resistance | - | | ○ | ○ | ○ | Δ | ○ | Δ | ○ |
| | (Initial) tensile strength at break | MPa | | 17 | 15 | 15 | 14 | 16 | 13 | 17 |
| | (Initial) tensile elongation at break | % | | 450 | 380 | 350 | 400 | 410 | 390 | 450 |

| | | | Comparative Example 1 | Comparative Example 2 | Comparative Example 3 | Comparative Example 4 | Comparative Example 5 | Comparative Example 6 |
|---|---|---|---|---|---|---|---|---|
| Blending composition of resin composition | Thermoplastic polyester elastomer | A-1 | 80 | 76 | 81 | 80.7 | 75.5 | |
| | | A-2 | | | | | | 80 |
| | | A-3 | | | | | | |
| | Polycarbodiimide | B-1 | 1.0 | 5.0 | | 0.3 | 1.5 | 1.0 |
| | | B-2 | | | | | | |
| | Glycidyl compound | B'-1 | | | | | 4.0 | |
| | Flame retardant | C-1 | 15.0 | 15.0 | 15.0 | 15.0 | 15.0 | 15.0 |
| | | C-2 | 4.0 | 4.0 | 4.0 | 4.0 | 4.0 | 4.0 |
| | | C-3 | | | | | | |
| Performance evaluation | Method for charging the polycarbodiimide | - | B | B | - | A | A | A |
| | Acid value | eq/ton | 16 | 1 | 37 | 17 | 1 | 1 |
| | MFR (2.16 kg, 230°C, 5 min) | g/10 min | 4 | 3 | 30 | 10 | 1 | 5 |
| | ΔMFR (2.16 kg, 230°C, Δ 30 min) | g/10 min | 26 | -2 | 56 | 22 | 0 | 1 |
| | Extrusion moldability — Fluctuation in the discharge amount | | ○ | × | - | ○ | - | ○ |
| | Extrusion moldability — Smoothness | | × | × | - | × | - | ○ |
| | Flame retardancy | - | V-2 | V-2 | V-2 | V-2 | V-2 | V-2 |
| | Heat resistance and heat aging resistance | - | × | ○ | × | × | ○ | × |
| | (Initial) tensile strength at break | MPa | 11 | 20 | 7 | 12 | 20 | 14 |
| | (Initial) tensile elongation at break | % | 330 | 490 | 240 | 380 | 440 | 490 |

As can be seen from Table 2, all of Examples 1 to 7 satisfying the requirements of the present invention exhibited small fluctuations of the discharge amount during extrusion molding, excellent smoothness, and excellent extrusion moldability. In addition, it was also excellent in flame retardancy. The thermoplastic polyester elastomer was also excellent in heat resistance, heat aging resistance, tensile strength at break and tensile elongation at break, which are basic performance requirements as a thermoplastic polyester elastomer.

On the other hand, in Comparative Example 1, the blending ratio of the polycarbodiimide was the same as that in Example 1, but since the polycarbodiimide was charged together with other components, the thermoplastic polyester elastomer could not be sufficiently end-capped with the polycarbodiimide, the acid value could not be sufficiently reduced, and the ΔMFR was too high. As a result, smoothness was poor, and extrusion moldability was poor. It was also inferior in heat resistance and heat aging resistance.

In Comparative Example 2, since the amount of the polycarbodiimide blended was excessive, an unreacted polycarbodiimide remained, gelation occurred, and viscosity was increased, so that the ΔMFR was too low, and the extrusion moldability was unstable from the initial stage of molding. In addition, since the polycarbodiimide was charged together with other components, local thickening easily proceeded although the excessive amount of polycarbodiimide was blended. As a result, the extrusion molding stability was poor.

In Comparative Example 3, a polycarbodiimide (B-1) was not blended at all. Accordingly, the acid value could not be sufficiently decreased and the MFR and ΔMFR were too high. As a result, extrusion molding was impossible in the first place.

In Comparative Example 4, a polycarbodiimide (B-1) was hardly blended. Accordingly, the acid value could not be sufficiently decreased and the ΔMFR was too high although the other points were the same as in Example 1. As a result, smoothness was poor, and extrusion moldability was poor. It was also inferior in heat resistance and heat aging resistance.

In Comparative Example 5, gelation occurred due to excessive blending of a polyfunctional glycidyl compound (B'-1), and thus the MFR was too low. As a result, extrusion molding was impossible in the first place.

In Comparative Example 6, a compound (A-2) in which the soft segment was not an aliphatic polycarbonate but an aliphatic polyether was used as the thermoplastic polyester elastomer. Accordingly, the heat resistance and heat aging resistance were inferior although the other points were the same as in Example 1.

Industrial Applicability

The flame-retardant thermoplastic polyester elastomer resin composition of the present invention satisfies basic performance requirements for parts of automobiles and home electric appliances, such as heat resistance, weather resistance, heat aging resistance, water resistance, and low-temperature characteristics, and is also excellent in extrusion moldability, so that it is possible to produce, with high accuracy, a hollow and long molded article required to have a uniform thickness such as a cable and a hose. Therefore, the present invention greatly contributes in industrial world.

**Claims**

1. A flame-retardant thermoplastic polyester elastomer resin composition comprising 50 to 94 mass% of a thermoplastic polyester elastomer and 1 to 45 mass% of a flame retardant, wherein the thermoplastic polyester elastomer comprises a hard segment made of a polyester constituted of an aromatic dicarboxylic acid and an aliphatic or alicyclic diol and a soft segment mainly made of an aliphatic polycarbonate, wherein the hard segment and the soft segment are bonded to each other, and wherein the thermoplastic polyester elastomer is at least partially end-capped with a polycarbodiimide,

characterized in that a melt flow rate (MFR) value of the flame-retardant thermoplastic polyester elastomer resin composition is 2 to 15 g/10 min as measured at 230°C under a load of 2.16 kg in accordance with a flow test method for thermoplastics specified in JIS K 7210, and
a difference (ΔMFR: MFR35 - MFR5) between an MFR value (MFR35) at 35 minutes and an MFR value (MFR5) at 5 minutes after the flame-retardant thermoplastic polyester elastomer resin composition is added is 0 to 20 g/10 min.

2. The flame-retardant thermoplastic polyester elastomer resin composition according to claim 1, wherein, when a cycle in which a temperature of the thermoplastic polyester elastomer is raised from room temperature to 300°C at a temperature raising rate of 20°C/min, held at 300°C for 3 minutes, and then lowered to room temperature at a temperature lowering rate of 100°C/min using a differential scanning calorimeter is repeated 3 times, a difference in melting point (Tm1 - Tm3) between a melting point (Tm1) obtained in a first measurement and a melting point (Tm3) obtained in a third measurement is 0 to 50°C.

3. The flame-retardant thermoplastic polyester elastomer resin composition according to claim 1 or 2, wherein an acid value of the thermoplastic polyester elastomer is 15 eq/ton or less.

4. A molded article obtained by extrusion molding of the flame-retardant thermoplastic polyester elastomer resin composition according to any one of claims 1 to 3.

5. The molded article according to claim 4, wherein the molded article is a cable or a hose.

## INTERNATIONAL SEARCH REPORT

International application No.

**PCT/JP2022/009705**

### A. CLASSIFICATION OF SUBJECT MATTER

***C08K 5/5313***(2006.01)i; ***C08L 25/18***(2006.01)i; ***C08L 67/00***(2006.01)i; ***C08K 3/22***(2006.01)i; ***C08G 63/16***(2006.01)i
FI:   C08L67/00; C08G63/16; C08K5/5313; C08L25/18; C08K3/22

According to International Patent Classification (IPC) or to both national classification and IPC

### B. FIELDS SEARCHED

Minimum documentation searched (classification system followed by classification symbols)

C08K5/5313; C08L25/18; C08L67/00; C08K3/22; C08G63/16

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2010-248405 A (TOYO BOSEKI) 04 November 2010 (2010-11-04) claims, paragraphs [0004], [0011], examples | 1-5 |
| Y | | 1-5 |
| Y | JP 2011-94000 A (TOYO BOSEKI) 12 May 2011 (2011-05-12) claims, paragraphs [0003], [0005], [0029], [0079], examples | 1-5 |
| Y | JP 2012-107155 A (TOYO BOSEKI) 07 June 2012 (2012-06-07) claims, paragraphs [0003], [0017], [0040] examples | 1-5 |
| Y | WO 2007/072748 A1 (TOYO BOSEKI) 28 June 2007 (2007-06-28) claims, paragraphs [0012], [0062], [0164], exmaples | 1-5 |
| Y | WO 2018/155411 A1 (TOYOBO CO., LTD.) 30 August 2018 (2018-08-30) claims, examples | 1-5 |
| Y | JP 2008-115197 A (DAICEL CHEM IND LTD) 22 May 2008 (2008-05-22) claims, paragraph [0022], examples | 1-5 |

☑ Further documents are listed in the continuation of Box C.     ☑ See patent family annex.

| | |
|---|---|
| \* Special categories of cited documents: | "T"  later document published after the international filing date or priority date and not in conflict with the application but cited to understand the principle or theory underlying the invention |
| "A"  document defining the general state of the art which is not considered to be of particular relevance | |
| "E"  earlier application or patent but published on or after the international filing date | "X"  document of particular relevance; the claimed invention cannot be considered novel or cannot be considered to involve an inventive step when the document is taken alone |
| "L"  document which may throw doubts on priority claim(s) or which is cited to establish the publication date of another citation or other special reason (as specified) | "Y"  document of particular relevance; the claimed invention cannot be considered to involve an inventive step when the document is combined with one or more other such documents, such combination being obvious to a person skilled in the art |
| "O"  document referring to an oral disclosure, use, exhibition or other means | |
| "P"  document published prior to the international filing date but later than the priority date claimed | "&"  document member of the same patent family |

| Date of the actual completion of the international search | Date of mailing of the international search report |
|---|---|
| **18 April 2022** | **10 May 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**

| International application No. |
|---|
| **PCT/JP2022/009705** |

**C.    DOCUMENTS CONSIDERED TO BE RELEVANT**

| Category* | Citation of document, with indication, where appropriate, of the relevant passages | Relevant to claim No. |
|---|---|---|
| A | JP 2012-140532 A (TOYO BOSEKI) 26 July 2012 (2012-07-26)<br>claim 4, paragraph [0054], examples | 1-5 |
| P, X | WO 2021/172348 A1 (TOYOBO CO., LTD.) 02 September 2021 (2021-09-02)<br>claims, examples | 1-5 |

Form PCT/ISA/210 (second sheet) (January 2015)

<table>
<tr><td colspan="2">INTERNATIONAL SEARCH REPORT<br>Information on patent family members</td><td colspan="2">International application No.<br><b>PCT/JP2022/009705</b></td></tr>
</table>

| Patent document<br>cited in search report | Publication date<br>(day/month/year) | Patent family member(s) | Publication date<br>(day/month/year) |
|---|---|---|---|
| JP 2010-248405 A | 04 November 2010 | (Family: none) | |
| JP 2011-94000 A | 12 May 2011 | (Family: none) | |
| JP 2012-107155 A | 07 June 2012 | (Family: none) | |
| WO 2007/072748 A1 | 28 June 2007 | US 2009/0203871 A1<br>claims, paragraphs [0024],<br>[0090], [0249], examples<br>EP 1964871 A1<br>CN 101341186 A<br>KR 10-2008-0075131 A | |
| WO 2018/155411 A1 | 30 August 2018 | (Family: none) | |
| JP 2008-115197 A | 22 May 2008 | WO 2006/092974 A1<br>claims, paragraph [0029],<br>examples<br>TW 200704707 A | |
| JP 2012-140532 A | 26 July 2012 | (Family: none) | |
| WO 2021/172348 A1 | 02 September 2021 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 10017657 A
- JP 2003192778 A
- JP 4244067 B
- JP 2008308635 A
- JP 5481916 B